# EUROPEAN PATENT SPECIFICATION

(11) **EP 3 996 425 B1**
(45) Date of publication and mention of the grant of the patent: **07.01.2026**
(21) Application number: 20206002.6
(22) Date of filing: 05.11.2020
(51) Int. Cl.: H04W 52/02, H04B 5/00

(54) **RF COMMUNICATION DEVICES AND OPERATING METHODS**
RF-KOMMUNIKATIONSGERÄTE UND BETRIEBSMETHODEN
DISPOSITIFS DE COMMUNICATION RF ET PROCÉDÉS DE FONCTIONNEMENT

(43) Date of publication of application: 11.05.2022
(73) Proprietor: NXP B.V., 5656 AG Eindhoven (NL)
(72) Inventor: MUEHLMANN, Ulrich Andreas, 5656AG Eindhoven (NL); WOBAK, Markus, 5656AG Eindhoven (NL)
(74) Representative: Krott, Michel

(56) References cited:
- EP-A1- 3 681 103
- EP-A2- 1 934 638
- EP-B1- 1 934 638
- US-A1- 2018 317 041
- US-B1- 9 477 292

## Description

### TECHNICAL FIELD

The present disclosure relates to radio frequency (RF) communication devices. Furthermore, the present disclosure relates to methods of operating RF communication devices and to corresponding computer programs.

### BACKGROUND

Radio frequency (RF) communication devices are widely used. Examples of RF communication devices are near field communication (NFC) devices and radio frequency identification (RFID) devices. Typically, an NFC system or an RFID system includes a reader device - sometimes referred to as a reader, an interrogator or a proximity coupling device (PCD) - which generates a high-frequency radio field, and a passive or active communication counterpart. The communication counterpart may be a passive transponder or an active card emulation device, for example, which may be referred to as a proximity integrated circuit card (PICC). The reader device emits a radio frequency field that may power the communication counterpart. Modulation schemes and signal coding are applied for the communication between the devices. Specific implementation examples are described, *inter alia,* in the technical standards issued by the NFC Forum, and in the technical standards ISO/IEC 14443, ISO/IEC 15693, ISO/IEC 18092.

A primary device, i.e. a reader, should normally enable its RF field and poll for counterparts in all different communication technologies (such as NFC-A, NFC-B, NFC-F, NFC-V) to detect communication counterparts. Especially for battery-powered devices (e.g. mobile devices, wearables, door lock readers) this is not efficient and reduces device availability due to power limitations. Therefore, a technique called Low Power Card Detection (LPCD) may be applied, which extends the battery lifetime by using short RF sense pulses to detect load changes at the RF interface of the reader. This allows the reader to reduce its RF field ON-duration and to switch to a power-saving state between the sense pulses (e.g. to enter a current-saving standby mode).

EP 3 681 103 A1 describes a control system for a radio frequency (RF) communication device, the system comprising: a communication controller configured to control an RF communication of the RF communication device; a detector configured to detect the presence of an external communication device and to initiate a wake-up of the communication controller in dependence on said presence; wherein the detector is configured to detect said presence by detecting a first load on an RF interface of the RF communication device, said first load resulting from a first transmitted RF pulse; and wherein the detector is configured to initiate said wake-up if a difference between the first load and a reference load is above a high threshold, and to perform a presence verification if the difference between the first load and the reference load is between a low threshold and the high threshold.

US 2018/317041 A1 describes an apparatus that may be configured to receive a notification from a wireless device indicating a presence of a wireless device. The apparatus may also be configured to determine at least one of a set of beacon parameters or a beacon content after receiving the notification indicating the presence of the wireless device. Additionally, the apparatus may be configured to transmit a beacon to the wireless device based on the determined at least one of the set of beacon parameters or the beacon content.

EP 1 934 638 A2 describes an active logistical tag for cooperation with cargo elements, said tag comprising: a housing compatible for attachment of said tag to said cargo; a sensor suite for sensing logistical prompts, said prompts including at least one of motion, static magnetic fields and incident electromagnetic radiation; and a transmitter coupled to said sensor suite, for communicating logistical information in response to said logistical prompts

Another prior art example is disclosed in US9477292 B1.

### SUMMARY

In accordance with a first aspect of the present disclosure, a radio frequency (RF) communication device is provided, as defined in claim 1.

In one or more embodiments, correlating the pattern within the beacon signal with the predefined pattern yields a reception strength indicator, and the processing unit is configured to compare said reception strength indicator with the reference value in order to determine said difference.

In one or more embodiments, the communication unit is configured to transmit RF pulses by generating the RF field.

In one or more embodiments, the communication device is a proximity coupling device.

In accordance with a second aspect of the present disclosure, a method of operating an RF communication device is conceived, as defined in claim 5.

In accordance with a third aspect of the present disclosure, a computer program is provided, comprising instructions which, when executed by an RF communication device, carry out or control the steps of a method of the kind set forth.

In accordance with a fourth aspect of the present disclosure, an RF communication device is provided, as defined in claim 7.

In one or more embodiments, the beacon signal generation unit comprises a modulator for generating the modulation pattern.

In one or more embodiments, the communication device is a proximity integrated circuit card.

In accordance with a fifth aspect of the present disclosure, a method of operating an RF communication device is conceived, as defined in claim 10.

In accordance with a sixth aspect of the present disclosure, a computer program is provided, comprising instructions which, when executed by an RF communication device, carry out or control the steps of a method of the kind set forth.

### DESCRIPTION OF DRAWINGS

Embodiments will be described in more detail with reference to the appended drawings, in which:
Fig. 1 shows an example of an NFC communication system;
Fig. 2A shows an illustrative embodiment of an RF communication device;
Fig. 2B shows an illustrative embodiment of a method of operating an RF communication device;
Fig. 2C shows another illustrative embodiment of an RF communication device;
Fig. 2D shows another illustrative embodiment of a method of operating an RF communication device;
Fig. 3A shows an illustrative embodiment of a timing diagram;
Fig. 3B shows another illustrative embodiment of a timing diagram;
Fig. 4A shows an illustrative embodiment of a beacon signal generation unit;
Fig. 4B shows illustrative embodiments of beacon signals;
Fig. 5A shows an illustrative embodiment of a beacon signal provided at the antenna of a proximity integrated circuit card (PICC);
Fig. 5B shows an illustrative embodiment of a beacon signal at the receiver input of a proximity coupling device (PCD);
Fig. 6 shows an illustrative embodiment of a beacon receiver;
Fig. 7 shows an illustrative embodiment of beacons received by a signal processing unit;
Fig. 8 shows another illustrative embodiment of beacons received by a signal processing unit;
Fig. 9 shows an illustrative embodiment of the operation of a PCD and a receiver included therein.

### DESCRIPTION OF EMBODIMENTS

Radio frequency (RF) communication devices are widely used. Examples of RF communication devices are near field communication (NFC) devices and radio frequency identification (RFID) devices. Typically, an NFC system or an RFID system includes a reader device - sometimes referred to as a reader, an interrogator or a proximity coupling device (PCD) - which generates a high-frequency radio field, and a passive or active communication counterpart. The communication counterpart may be a passive transponder or an active card emulation device, for example, which may be referred to as a proximity integrated circuit card (PICC). The reader device emits a radio frequency field that may power the communication counterpart. Modulation schemes and signal coding are applied for the communication between the devices. Specific implementation examples are described, *inter alia,* in the technical standards issued by the NFC Forum, and in the technical standards ISO/IEC 14443, ISO/IEC 15693, ISO/IEC 18092.

A primary device, i.e. a reader, should normally enable its RF field and poll for counterparts in all different communication technologies (such as NFC-A, NFC-B, NFC-F, NFC-V) to detect communication counterparts. Especially for battery-powered devices (e.g. mobile devices, wearables, door lock readers) this is not efficient and reduces device availability due to power limitations. Therefore, a technique called Low Power Card Detection (LPCD) may be applied, which extends the battery lifetime by using short RF sense pulses to detect load changes at the RF interface of the reader. This allows the reader to reduce its RF field ON-duration and to switch to a power-saving state between the sense pulses (e.g. to enter a current-saving standby mode).

It is noted that Low Power Card Detection (LPCD) may also be referred to, in a more generic sense, as Lower Power Device Detection (LPDD). In other words, the low-power detection techniques as described herein may not only be applied to systems in which physical or virtual smart cards should be detected, for example, but also to systems in which other types of devices should be detected, for example radio frequency identification (RFID) tags or near field communication (NFC) tags.

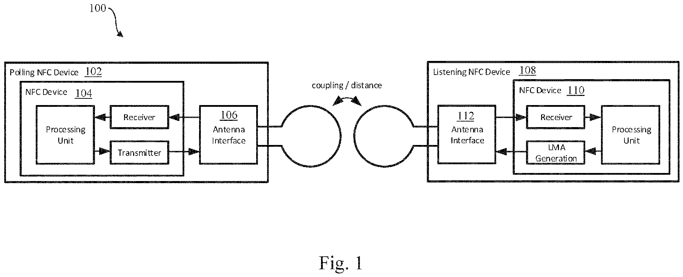

**Fig. 1** shows an example of an NFC system 100. The NFC system 100 comprises a polling NFC device 102 (i.e., a proximity coupling device) and a listening NFC device 108 (i.e., a proximity integrated circuit card), which are coupled to each other by means of inductive coupling. To enable such a coupling, the polling NFC device 102 comprises an NFC device 104 - i.e., a communication unit including a receiver, a transmitter and a processing unit - an antenna interface 106 and an antenna. Similarly, the listening NFC device 108 comprises an NFC device 110 - i.e., a communication unit including a receiver, a load modulation amplitude (LMA) generation unit and a processing unit - an antenna interface 112 and an antenna. It is noted that the NFC device 104 of the polling NFC device 102 includes a transmitter for transmitting a signal, while the NFC device 110 of the listening NFC device 108 contains a modulator (i.e., the LMA generation unit) for modulating the signal received from the polling NFC device 102.

In such a system, the communication is normally initiated by the polling NFC device 102 by sending a polling command. After successful reception, the listening NFC device 108 will respond with a corresponding answer. More specifically, the listening NFC device 108 may respond using active or passive load modulation techniques. In the example shown in Fig. 1, the LMA generation unit may apply such load modulation techniques. The devices 102, 108 are often arbitrary displaced in a proximity volume of a couple of centimeters, which may lead to arbitrary coupling between their antennas. Consequently, arbitrary signal levels may be seen in the receiver of the polling NFC device 102. This arbitrary displacement may also have an impact on the detection of devices when the above-mentioned LPDD method is applied.

Active RFID/NFC tags, i.e. battery-powered tags, continuously gain interest in the market. This trend is mainly driven by the small form factors of the products, which makes it difficult to place reasonably sized antennas in such products. For passive tags, i.e. tags which are merely powered by the field, antennas should be properly sized, in order to achieve a satisfactory user experience. Nevertheless, passive tags are attractive in the sense that no battery is needed for their operation. In order to properly detect and react on approaching passive tags, readers often apply the above-mentioned LPDD technique. Thereby, tags can be detected without consuming a lot of power, and the relevant components of the reader can be woken up if an approaching tag is detected (e.g., components which are configured to send a polling command to the detected tag). Thus, LPDD may be implemented in a reader (e.g., embedded in a mobile phone or another mobile device), as a power-efficient method to query permanently for approaching tags. In that case, time-multiplexing of the RF-ON/OFF period is normally applied with a low duty cycle. Furthermore, a mobile phone should have a mechanism to detect the appearance of a tag in its proximity, in order to start a transaction with said tag. Current solutions are based on an estimation of the change of direct current (DC) resulting from the movement of a tag towards the mobile phone. The movement of the tag results in a dynamic coupling change. However, this method has some limitations. For example, using this method, it is difficult to detect, query and disable static tags (i.e., tags which are within range of the RF field generated by the phone's reader but which are not moving towards the phone). Furthermore, using said method, it is difficult to detect tags when the coupling is very weak but not sensitivity-limited. Thus, although a reader may in theory be sensitive enough to receive weak signals from the tags, these signals may in practice be too weak for the LPDD method to detect the tags. In other words, the RF communication (e.g., the exchange of signals using modulation techniques) with a tag can often be performed when the magnetic coupling is relatively weak, i.e. at a distance which is larger than the maximum tag detection distance supported by a typical LPDD method.

In particular, two types of limitations may be visible on an application-level. First, in a mobile use case, the powering distance of tags using passive modulation (such as ICODE^{®} tags) is significantly larger than the distance at which RF communication is possible. This holds in particular for mobile phone form-factor NFC antenna designs. Still, the reception distance is not limited by the mobile phone's receiver sensitivity. Instead, the reception distance is limited by the LPDD method, performing approximately 20% less in comparison to the actual receiver sensitivity. Second, in a mobile use case, the reception distance of active tags is not limited by the receiver sensitivity. However, it is limited by the LPDD method in place, performing approximately 80% to 100% less in comparison to the actual receiver sensitivity. This may be caused by the very small antennas (1 cm² to 2 cm²) which are used, resulting in a very low coupling change which is not detectable by the LPDD method.

Now discussed are radio frequency (RF) communication devices and corresponding operating methods, which facilitate properly detecting and reacting on a movement between those devices, even under unfavorable circumstances such as weak coupling. It is noted that the presently disclosed devices and methods may be compatible with, for example, the aforementioned LPDD techniques, in the sense that the presently disclosed techniques may be used as an alternative to, but also in addition to said LPDD techniques. Furthermore, the presently disclosed devices and methods may be applied in scenarios where the communication counterparts (i.e., the PICCs) are passive devices or active devices.

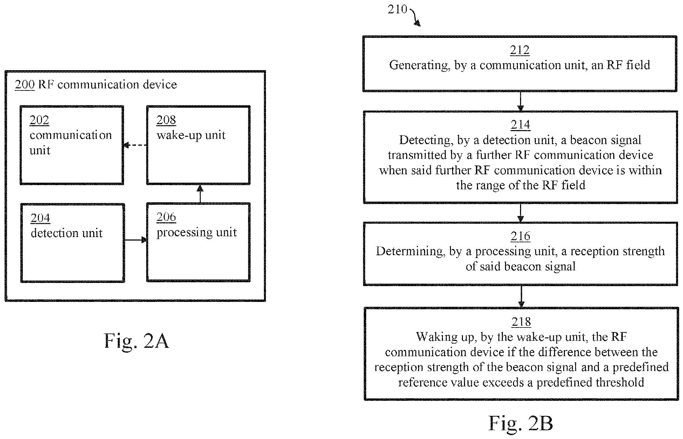

Fig. 2A shows an illustrative embodiment of an RF communication device 200. The RF communication device 200 comprises a communication unit 202, a detection unit 204, a processing unit 206, and a wake-up unit 208. It is noted that, although these units are shown as functionally separated units, some of them may be physically integrated into a single module or form part of the same physical entity. The communication unit 202 is configured to generate an RF field. Furthermore, the detection unit 204 is configured to detect a beacon signal transmitted by a further RF communication device (not shown) when said further RF communication device is within the range of the RF field. Furthermore, the processing unit 206 is configured to determine a reception strength of said beacon signal. Finally, the wake-up unit 208 is configured to wake up the RF communication device 200 if the difference between the reception strength of the beacon signal and a predefined reference value exceeds a predefined threshold. This embodiment facilitates properly detecting and reacting on a movement between the RF communication device and the further RF communication device, even under unfavorable circumstances such as weak coupling. In a practical implementation, the RF communication device is a proximity coupling device of the kind set forth. In that case, the further RF communication device may be a proximity integrated circuit card.

In particular, the RF communication device 200 is woken up if the detection unit 204 and the processing unit 206 have determined, using the beacon signal, that the further RF communication device is approaching the RF communication device 200. For example, the communication unit 202 of the RF communication unit 200 may be fully woken up, so that said communication unit 202 may perform active polling using modulation techniques. In addition, other components (not shown) of the RF communication device 200 may be woken up. It is noted that, as used herein, the term "waking up" does not imply that the RF communication device 200 is fully switched off, but merely that most components of the RF communication device 200 are in a sleep state or a low-power state. That is to say, the RF communication device 200 is not fully switched off, because the RF field should be generated and the beacon signal should be detected and processed.

Accordingly, the wake up may include switching from a power-saving polling operation mode to a continuous operation mode of the RF communication device 200. It is noted that the presently disclosed beacon-based wake-up may be applied as an alternative to or in addition to an LPDD-based wake-up. For instance, between an LPDD polling phase, during which RF field pings are generated and measurement results are processed, the RF communication device 200 (e.g., a mobile device) may be in a power-saving state (e.g., a standby mode of operation). In that case, only after a successful detection of a predefined event a wake-up may be triggered. The predefined event may for example be a load change event when a typical LPDD technique is applied, and - alternatively or in addition - the detection of a beacon signal. The detection of the event may trigger the wake-up of the RF communication device 200, in the sense that its NFC controller is fully booted. The booting process may include powering up additional components, as mentioned above. In addition, the wake-up may include triggering the RF communication device 200 to perform active RF polling using modulation techniques (for example, an NFC discovery process). It is noted that using LPDD may enable the detection of tags while significantly reducing average power consumption, because the RF-on duration is reduced: while LPDD may use RF pulses with a duration of approximately 40 microseconds, active RF polling for multiple RF technologies like NFC-A, NFC-B, NFC-F, NFC-V may require RF-on periods with a duration of 50 to 100 milliseconds. The presently disclosed beacon-based wake up may be applied as an alternative to, or in addition to, the LPDD technique, to properly detect and react on a movement between the RF communication device 200 and a further RF communication device, even under unfavorable circumstances such as weak coupling.

In one or more embodiments, the processing unit is configured to determine the reception strength of the beacon signal by correlating a pattern within said beacon signal with a predefined pattern. In this way, the determination of the reception strength is facilitated. Accordingly, a beacon signal may include or effectively be implemented as a modulation pattern. For example, the modulation pattern may be a predefined pattern which is modulated upon a carrier signal using a passive load modulation or active load modulation process. It is noted that correlation may refer to a mathematical and/or statistical method to determine the strength or the probability of a similarity between two values. In the present context, the presence of a beacon signal is detected. This may be achieved by applying a correlation method, according to which a received signal is compared with an ideal beacon signal. In that case, the output of the correlator may be indicative of the degree of similarity between the received signal and the ideal beacon signal. Furthermore, if the correlator output exceeds a configurable threshold, then the beacon signal may be deemed to be detected.

Furthermore, in one or more embodiments, correlating the pattern within the beacon signal with the predefined pattern yields a reception strength indicator, and the processing unit is configured to compare said reception strength indicator with the reference value in order to determine said difference. This further facilitates the determination of the reception strength of the beacon signal. It is noted that the aforementioned correlator output is an example of said reception strength indicator. Furthermore, the configurable threshold is an example of said reference value. In one or more embodiments, said pattern is a modulation pattern generated by applying passive load modulation or active load modulation. In this way, the detection and processing of the beacon signal are facilitated, because it can easily be detected and processed using a demodulator and associated processing circuitry of the RF communication device. Furthermore, in one or more embodiments, the communication unit is configured to transmit RF pulses by generating the RF field. Thus, in addition to detecting approaching tags using the beacon signal, the RF communication device may apply an LPDD method to detect tags. This may further facilitate the detection of tags.

**Fig. 2B** shows an illustrative embodiment of a method 210 of operating an RF communication device. The method 210 comprises the following steps. At 212, an RF field is generated by a communication unit of an RF communication device. Furthermore, at 214, a beacon signal transmitted by a further RF communication device is detected by a detection unit of the RF communication device, when said further RF communication device is within the range of the RF field. Furthermore, at 216, a reception strength of the beacon signal is determined by a processing unit comprised in the RF communication device. Furthermore, at 218, the RF communication device is woken up if the difference between the reception strength of the beacon signal and a predefined reference value exceeds a predefined threshold. At least some of these steps may be implemented as or controlled by instructions included in a computer program.

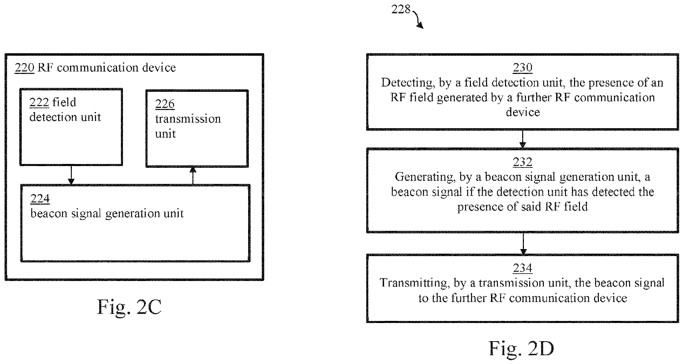

**Fig. 2C** shows another illustrative embodiment of an RF communication device 220. The RF communication device 220 comprises a field detection unit 222, a beacon signal generation unit 224 and a transmission unit 226. It is noted that, although these units are shown as functionally separated units, some of them may be physically integrated into a single module or form part of the same physical entity. The field detection unit 222 is configured to detect the presence of an RF field generated by a further RF communication device (not shown). Furthermore, the beacon signal generation unit 224 is configured to generate a beacon signal if the detection unit 222 has detected the presence of said RF field. Finally, the transmission unit 226 is configured to transmit the beacon signal to the further RF communication device. This embodiment facilitates properly detecting and reacting on a movement between the RF communication device and the further RF communication device, even under unfavorable circumstances such as weak coupling. In a practical implementation, the RF communication device is a proximity integrated circuit card of the kind set forth. In that case, the further RF communication device may be a proximity coupling device.

In one or more embodiments, the beacon signal comprises a modulation pattern. In this way, the detection and processing of the beacon signal at the side of the RF communication device are facilitated. In a practical implementation, the beacon signal generation unit comprises a modulator for generating the modulation pattern. Since a RF communication device typically already comprises a modulator, no additional component is needed for generating the pattern of the beacon signal. Furthermore, in one or more embodiments, the modulator is configured to apply passive load modulation or active load modulation in order to generate the modulation pattern. In this way, the detection and processing of the beacon signal at the side of the RF communication device are further facilitated.

**Fig. 2D** shows another illustrative embodiment of a method 228 of operating an RF communication device. The method 228 comprises the following steps. At 230, the presence of an RF field generated by a further RF communication device is detected by a field detection unit of an RF communication device. Furthermore, at 232, a beacon signal is generated by a beacon signal generation unit comprised in the RF communication device, if the detection unit has detected the presence of said RF field. Furthermore, at 234, the beacon signal is transmitted to the further RF communication device by a transmission unit of the RF communication device. At least some of these steps may be implemented as or controlled by instructions included in a computer program.

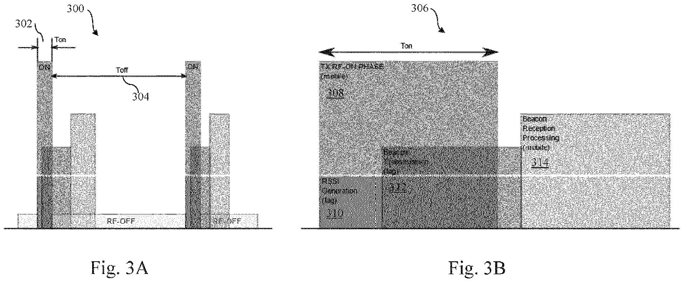

**Fig. 3A** shows an illustrative embodiment of a timing diagram 300. In particular, it is shown how a beacon signal is generated in addition to LPDD pulses. A proximity coupling device, for example integrated in a mobile phone, may generate a continuous RF field for a short period in order to generate LPDD pulses during an RF field on phase 302. Then, a proximity integrated circuit card, for example a tag, may detect the external RF field, generate a beacon signal including a modulation pattern and transmit said beacon signal to the proximity coupling device. Subsequently, a beacon signal detector of the proximity coupling device may detect the beacon signal, so that the beacon signal including the modulation pattern can be processed. Some or all of the steps performed after the RF field detection may at least partially be performed when the RF field has already been switched off, i.e. during an RF field off phase 204.

**Fig. 3B** shows another illustrative embodiment of a timing diagram 306. In particular, a schematic and more detailed view of a packet sequence is shown, corresponding to the first part of Fig. 3A. During an transmitter RF field on phase 308 of the mobile phone, the tag generates 310 a received signal strength indicator (RSSI). When this RSSI exceeds a given threshold, a field is deemed to be detected. Then, the tag generates a beacon signal and transmits 312 the beacon signal to the mobile phone. The mobile phone then receives the beacon signal and processes 314 the received beacon signal. It is noted that the proximity coupling device may transition into a power-saving state after step 314, and to wake up again before performing another cycle starting with an RF field on-phase 308. This may in particular be the case when step 308 has resulted in a correlation output which does not exceed a predefined threshold, such that the proximity coupling device is not woken up completely.

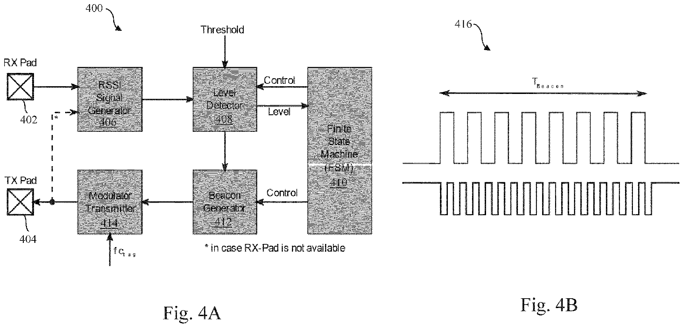

**Fig. 4A** shows an illustrative embodiment of a beacon signal generation unit 400. The beacon signal generation unit 400 comprises a receiver pad 402, a transmitter pad 404, an RSSI signal generator 406, a level detector 408, a finite state machine 410, a beacon generator 412, and a modulation and transmission unit 414. In particular, the beacon generator 400 may apply passive load modulation techniques or active load modulation techniques. If passive load modulation is applied, the modulation may for example be based on load switching or resonance frequency switching. The skilled person will appreciate that other types of modulation can also be applied to realize passive load modulation. Furthermore, the skilled person will appreciate that various techniques exist for realizing active load modulation. The first module in the chain is a signal detector based on an RSSI signal generator 406. It is noted that such an RSSI-based signal detector is merely an example of a suitable signal detector; other types of signal detectors can also be used. The signal detector may include an amplifier and an RF rectifier with a sequential threshold detector. Then, in case the threshold is hit, the RSSI detector indicates "signal detected". Subsequently, the beacon encoder (i.e., beacon generator 412) is activated.

**Fig. 4B** shows illustrative embodiments of beacon signals 416. An example of such a beacon signal is an encoded sequence of a 848kHz burst with a 50% duty cycle having a specific duration (for example 9.44 µs) modulated on a 13.56 MHz carrier signal. These beacon signals 416 are merely non-limiting examples. Another example of a signal pattern may be a Gold code, which has superior auto-correlation capabilities. The beacon signal can be transmitted in-band or out-of-band. In particular, in-band transmission refers to a transmission that uses the emission bandwidth covered by the proximity coupling device, which is typically 13.56MHz. In contrast, out-of-band transmission refers to the use of a secondary pair of communication devices, i.e. one on the side of the proximity coupling device and one on the side of the proximity integrated circuit card. This pair of communication devices may operate at a frequency different from the operating frequency of the proximity coupling device. Furthermore, a synchronization unit (such as a phase-locked loop) does not need to be included in, or connected to, the beacon signal transmitter.

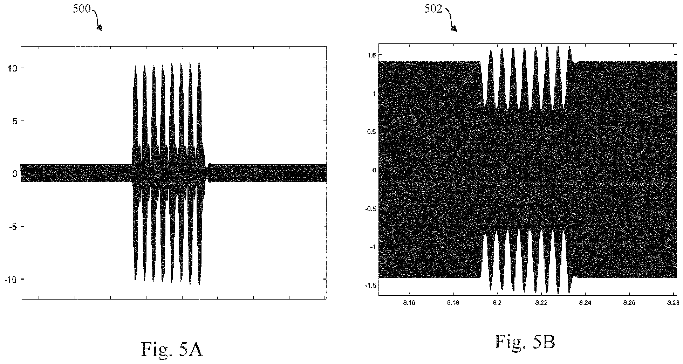

**Fig. 5A** shows an illustrative embodiment of a beacon signal provided at the antenna of a proximity integrated circuit card (PICC). The beacon signal fulfills the bandwidth requirements of a typical RFID or NFC system.

**Fig. 5B** shows an illustrative embodiment of a beacon signal at the receiver input of a proximity coupling device (PCD). In particular, it is shown how the beacon signal of Fig. 5A, which is transmitted by the PICC to the PCD, is present at the receiver input of the PCD. As mentioned, the beacon signal fulfills the bandwidth requirements of a typical RFID or NFC system.

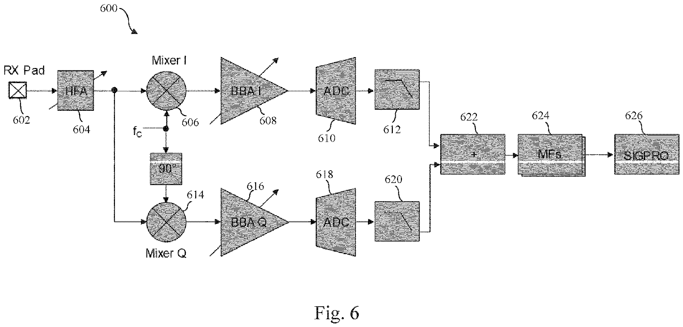

**Fig. 6** shows an illustrative embodiment of a beacon receiver 600. The beacon receiver 400 includes, in an analog domain, a high-frequency attenuator 604 coupled to a receiver pad 602. The high-frequency attenuator 604 is configured to hold the input signal in range. Furthermore, a mixer 606, 614 performs a down-conversion to the complex baseband, in the I-channel and the Q-channel. Furthermore, the beacon receiver 400 includes a complex-valued gain amplifier (BBAs 608, 616 for the I and Q channels) and a complex-valued analog-to-digital converter (I and Q channel ADCs 610, 618). The I and Q channels preserve the amplitude and phase information of the received beacon. After low-pass filtering and channel combination, the signal is passed to a set of matched filters (MFs) 624 fitting to the correlation characteristics of the used beacon. The correlation result is passed to a signal processing unit 626 that decides if a beacon is present or not.

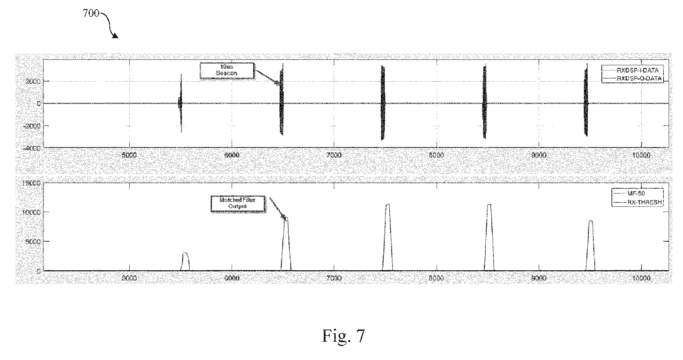

**Fig. 7** shows an illustrative embodiment of beacons 700 received by a signal processing unit of the kind set forth. In particular, the signal characteristics of the beacons when they are received are shown. It can be seen that the presently disclosed methods are also effective if a frequency offset exists between the proximity coupling device and the proximity integrated circuit card. The upper plot shows the down-mixed and filtered signals after the channel combiner. The lower plot shows the output of the set of matched filters. In this particular example, the beacon used matches MF-S0.

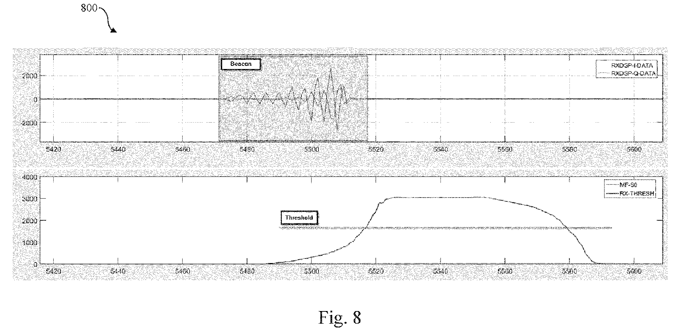

**Fig. 8** shows another illustrative embodiment of beacons received by a signal processing unit. In particular, a zoomed in version of the beacon reception sequence is shown. Again, the upper plot shows the down-mixed and filtered signals. The lower plot shows the outputs of the matched filters. In this particular example, the beacon used matches MF-S0. Furthermore, the applied threshold is shown. In case the threshold is hit, the maximum correlation is stored (roughly 3000 LSBs in this example). This level is used as a metric. In case this metric changes over time, it can be assumed that the transmission distance changes. In contrast, if this metric is constant, the coupling condition is static and the proximity coupling device may avoid a repetitive communication with the proximity integrated circuit card, in order to save power.

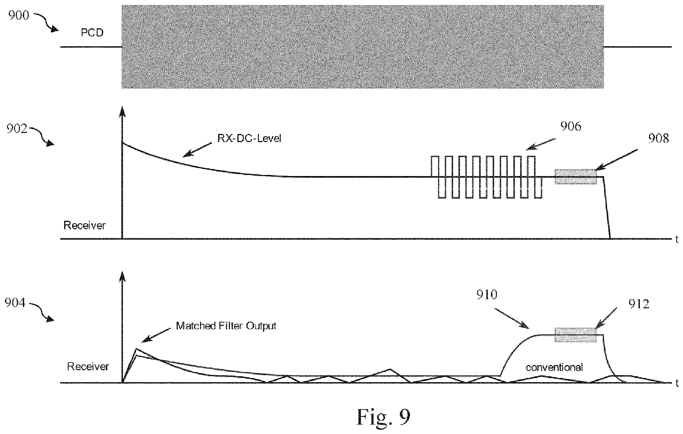

**Fig. 9** shows an illustrative embodiment of the operation of a PCD and a receiver included therein. In particular, the upper plot 900 illustrates the operation of the PCD, and the center plot 902 and lower plot 904 illustrate the operation of the receiver. In particular, it is illustrated how the presently disclosed methods may be used in conjunction with LPDD methods of the kind set forth. In the upper plot 900, the RF carrier ON-period of the proximity coupling device is shown, which is typically used to power up the coupling system. In the center plot 902, the resulting RF carrier is shown, as an RX-DC level at the demodulator output of the receiver. The RX-DC level is a function of the carrier level and the coupling condition. The carrier level is normally kept constant and the coupling condition will change when the distance between the proximity coupling device and the proximity integrated circuit card changes. This change can be tracked over time, compared with a metric, such that a "tag detected" state can be triggered. In case a beacon is present, the DC component of the beacon may be designed to be zero. Thus, the averaging over the beacon duration does not change the RX-DC level and the beacon has no impact on said metric. Furthermore, the beacon signal pattern 906 precedes the regular observation window 908, i.e. the conventional observation window for LPDD pulses.

In the lower plot 904, a signal processing is illustrated which may be used when the presently disclosed methods are applied. In this example, a corresponding filter is used serving two functions. First, it separates the DC from the beacon spectral characteristics, and second, it provides the necessary processing gain to be more sensitive over the existing DC averaging method used when the presently disclosed methods are not applied. Again, a change can be tracked over time, compared with a metric, such that a "tag detected" state can be triggered. However, this metric is now related to the received signal strength, rather than a coupling change over time. In addition, the selected beacon is designed to facilitate good correlation characteristics with matched filters that are already available in the design. Consequently, no hardware update may be required, and at the side of the proximity coupling device a simple firmware update may be necessary to facilitate the implementation of the presently disclosed methods. It is noted that the changed matched filter output 910 is observed during a modified observation window 912. Furthermore, the increase of the matched filter output 910 is delayed compared to the beacon signal pattern 906 which is part of the matched filter input signal, due to a processing delay.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The scope of the invention is defined in the appended claims.

### LIST OF REFERENCE SIGNS

- 100: NFC communication system
- 102: polling NFC device
- 104: NFC device
- 106: antenna interface
- 108: listening NFC device
- 110: NFC device
- 112: antenna interface
- 200: RF communication device
- 202: communication unit
- 204: detection unit
- 206: processing unit
- 210: method of operating an RF communication device
- 212: generating, by a communication unit, an RF field
- 214: detecting, by a detection unit, a beacon signal transmitted by a further RF communication device when said further RF communication device is within the range of the RF field
- 216: determining, by a processing unit, a reception strength of said beacon signal
- 218: waking up, by the wake-up unit, the RF communication device if the difference between the reception strength of the beacon signal and a predefined reference value exceeds a predefined threshold
- 220: RF communication device
- 222: field detection unit
- 224: beacon signal generation unit
- 226: transmission unit
- 228: method of operating an RF communication device
- 230: detecting, by a field detection unit, the presence of an RF field generated by a further RF communication device
- 232: generating, by a beacon signal generation unit, a beacon signal if the detection unit has detected the presence of said RF field
- 234: transmitting, by a transmission unit, the beacon signal to the further RF communication device
- 300: timing diagram
- 302: RF field on phase
- 304: RF field off phase
- 306: timing diagram
- 308: transmitter RF field on phase (mobile)
- 310: received signal strength indicator (RSSI) generation (tag)
- 312: beacon transmission (tag)
- 314: beacon reception processing (mobile)
- 400: beacon signal generation unit
- 402: receiver pad
- 404: transmitter pad
- 406: RSSI signal generator
- 408: level detector
- 410: finite state machine (FSM)
- 412: beacon generator
- 414: modulator transmitter
- 416: beacon signals
- 500: beacon signal provided at the antenna of the PICC
- 502: beacon signal at the receiver input of the PCD
- 600: beacon receiver
- 602: receiver pad
- 604: high-frequency attenuator
- 606: I-channel mixer
- 608: I-channel baseband amplifier
- 610: analog-to-digital converter
- 612: low-pass filter
- 614: Q-channel mixer
- 616: Q-channel baseband amplifier
- 618: analog-to-digital converter
- 620: low-pass filter
- 622: combiner
- 624: matched filters
- 626: signal processing unit
- 700: beacons received by the signal processing unit
- 800: beacons received by the signal processing unit
- 900: operation of a PCD
- 902: operation of a receiver
- 904: operation of a receiver
- 906: beacon signal pattern
- 908: regular observation window
- 910: matched filter output
- 912: modified observation window

## Claims

1. A radio frequency, RF, communication device (200) being a radio frequency identification, RFID, device or a near field communication, NFC device, comprising:
a communication unit (202) configured to generate an RF field;
a detection unit (204) configured to detect a beacon signal transmitted by a further RF communication device when said further RF communication device is within the range of the RF field;
a processing unit (206) configured to determine a reception strength of said beacon signal;
a wake-up unit (208) configured to wake up the RF communication device (200) if the difference between the reception strength of the beacon signal and a predefined reference value exceeds a predefined threshold;
wherein the processing unit (206) is configured to determine the reception strength of the beacon signal by correlating a pattern within said beacon signal with a predefined pattern, wherein the pattern within the beacon signal is a modulation pattern;
wherein said pattern is a modulation pattern generated by applying passive load modulation or active load modulation.

2. The device (200) of claim 1, wherein correlating the pattern within the beacon signal with the predefined pattern yields a reception strength indicator, and wherein the processing unit (206) is configured to compare said reception strength indicator with the reference value in order to determine said difference.

3. The device (200) of any preceding claim, wherein the communication unit (202) is configured to transmit RF pulses by generating the RF field.

4. The device (200) of any preceding claim, being a proximity coupling device.

5. A method (210) of operating a radio frequency, RF, communication device being a radio frequency identification, RFID, device or a near field communication, NFC device, the device comprising a communication unit, a detection unit, a processing unit and a wake-up unit, the method (210) comprising:
generating (212), by the communication unit, an RF field;
detecting (214), by the detection unit, a beacon signal transmitted by a further RF communication device when said further RF communication device is within the range of the RF field;
determining (216), by the processing unit, a reception strength of said beacon signal;
waking up (218), by the wake-up unit, the RF communication device if the difference between the reception strength of the beacon signal and a predefined reference value exceeds a predefined threshold;
wherein the processing unit determines the reception strength of the beacon signal by correlating a pattern within said beacon signal with a predefined pattern, wherein the pattern within the beacon signal is a modulation pattern;
wherein said pattern is a modulation pattern generated by applying passive load modulation or active load modulation.

6. A computer program comprising instructions which, when executed by a radio frequency, RF, communication device (200) being a radio frequency identification, RFID, device or a near field communication, NFC device, carry out or control the steps of the method (210) of claim 5.

7. A radio frequency, RF, communication device (220) being a radio frequency identification, RFID, device or a near field communication, NFC device, comprising:
a field detection unit (222) configured to detect the presence of an RF field generated by a further RF communication device;
a beacon signal generation unit (224) configured to generate a beacon signal if the detection unit (222) has detected the presence of said RF field;
a transmission unit (226) configured to transmit the beacon signal to the further RF communication device;
wherein the beacon signal comprises a modulation pattern;
wherein the modulator is configured to apply passive load modulation or active load modulation in order to generate the modulation pattern.

8. The device (220) of claim 8, wherein the beacon signal generation unit (224) comprises a modulator for generating the modulation pattern.

9. The device (220) of claim 7 or 8, being a proximity integrated circuit card.

10. A method (228) of operating a radio frequency, RF, communication device being a radio frequency identification, RFID, device or a near field communication, NFC device, the device comprising a field detection unit, a beacon signal generation unit and a transmission unit, the method (228) comprising:
detecting (230), by the field detection unit, the presence of an RF field generated by a further RF communication device;
generating (232), by the beacon signal generation unit, a beacon signal if the detection unit has detected the presence of said RF field;
transmitting (234), by the transmission unit, the beacon signal to the further RF communication device;
wherein the beacon signal comprises a modulation pattern;
wherein the modulator applies passive load modulation or active load modulation in order to generate the modulation pattern.

11. A computer program comprising instructions which, when executed by a radio frequency, RF, communication device (220) being a radio frequency identification, RFID, device or a near field communication, NFC device, carry out or control the steps of the method (228) of claim 10.

## Patentansprüche

1. Hochfrequenzkommunikationsvorrichtung, HF-Kommunikationsvorrichtung, (200), die eine Hochfrequenzidentifikationsvorrichtung, RFID-Vorrichtung, oder eine Nahfeldkommunikationsvorrichtung, NFC-Vorrichtung, ist und Folgendes umfasst:
eine Kommunikationseinheit (202), die dazu ausgelegt ist, ein HF-Feld zu erzeugen;
eine Detektionseinheit (204), die dazu ausgelegt ist, ein Bakensignal zu detektieren, das von einer weiteren HF-Kommunikationsvorrichtung übertragen wird, wenn sich die weitere HF-Kommunikationsvorrichtung innerhalb der Reichweite des HF-Feldes befindet;
eine Verarbeitungseinheit (206), die dazu ausgelegt ist, eine Empfangsstärke des Bakensignals zu bestimmen;
eine Weckeinheit (208), die dazu ausgelegt ist, die HF-Kommunikationsvorrichtung (200) aufzuwecken, falls die Differenz zwischen der Empfangsstärke des Bakensignals und einem vordefinierten Referenzwert einen vordefinierten Schwellenwert überschreitet;
wobei die Verarbeitungseinheit (206) dazu ausgelegt ist, die Empfangsstärke des Bakensignals durch Korrelieren eines Musters innerhalb des Bakensignals mit einem vordefinierten Muster zu bestimmen, wobei das Muster innerhalb des Bakensignals ein Modulationsmuster ist;
wobei das Muster ein Modulationsmuster ist, das durch Anwenden passiver Lastmodulation oder aktiver Lastmodulation erzeugt wird.

2. Vorrichtung (200) nach Anspruch 1, wobei das Korrelieren des Musters innerhalb des Bakensignals mit dem vordefinierten Muster einen Empfangsstärkeindikator ergibt und wobei die Verarbeitungseinheit (206) dazu ausgelegt ist, den Empfangsstärkeindikator mit dem Referenzwert zu vergleichen, um die Differenz zu bestimmen.

3. Vorrichtung (200) nach einem der vorhergehenden Ansprüche, wobei die Kommunikationseinheit (202) dazu ausgelegt ist, HF-Impulse durch Erzeugen des HF-Felds zu übertragen.

4. Vorrichtung (200) nach einem der vorhergehenden Ansprüche, die eine Näherungskopplungsvorrichtung ist.

5. Verfahren (210) zum Betreiben einer Hochfrequenzkommunikationsvorrichtung, HF-Kommunikationsvorrichtung, die eine Hochfrequenzidentifikationsvorrichtung, RFID-Vorrichtung, oder eine Nahfeldkommunikationsvorrichtung, NFC-Vorrichtung, ist, wobei die Vorrichtung eine Kommunikationseinheit, eine Detektionseinheit, eine Verarbeitungseinheit und eine Weckeinheit umfasst, wobei das Verfahren (210) Folgendes umfasst:
Erzeugen (212) eines HF-Feldes durch die Kommunikationseinheit;
Detektieren (214) eines Bakensignals durch die Detektionseinheit, das von einer weiteren HF-Kommunikationsvorrichtung übertragen wird, wenn sich die weitere HF-Kommunikationsvorrichtung innerhalb der Reichweite des HF-Feldes befindet;
Bestimmen (216) einer Empfangsstärke des Bakensignals durch die Verarbeitungseinheit;
Wecken (218) der HF-Kommunikationsvorrichtung durch die Weckeinheit, falls die Differenz zwischen der Empfangsstärke des Bakensignals und einem vordefinierten Referenzwert einen vordefinierten Schwellenwert überschreitet;
wobei die Verarbeitungseinheit die Empfangsstärke des Bakensignals durch Korrelieren eines Musters innerhalb des Bakensignals mit einem vordefinierten Muster bestimmt, wobei das Muster innerhalb des Bakensignals ein Modulationsmuster ist;
wobei das Muster ein Modulationsmuster ist, das durch Anwenden passiver Lastmodulation oder aktiver Lastmodulation erzeugt wird.

6. Computerprogramm, umfassend Anweisungen, die bei Ausführung durch eine Hochfrequenzkommunikationsvorrichtung, HF-Kommunikationsvorrichtung, (200), die eine Hochfrequenzidentifikationsvorrichtung, RFID-Vorrichtung, oder eine Nahfeldkommunikationsvorrichtung, NFC-Vorrichtung, ist, die Schritte des Verfahrens (210) nach Anspruch 5 ausführen oder steuern.

7. Hochfrequenzkommunikationsvorrichtung, HF-Kommunikationsvorrichtung, (220), die eine Hochfrequenzidentifikationsvorrichtung, RFID-Vorrichtung, oder eine Nahfeldkommunikationsvorrichtung, NFC-Vorrichtung, ist und Folgendes umfasst:
eine Felddetektionseinheit (222), die dazu ausgelegt ist, das Vorhandensein eines HF-Felds zu detektieren, das von einer weiteren HF-Kommunikationsvorrichtung erzeugt wird;
eine Bakensignalerzeugungseinheit (224), die dazu ausgelegt ist, ein Bakensignal zu erzeugen, falls die Detektionseinheit (222) das Vorhandensein des HF-Feldes detektiert hat;
eine Übertragungseinheit (226), die dazu ausgelegt ist, das Bakensignal an die weitere HF-Kommunikationsvorrichtung zu übertragen;
wobei das Bakensignal ein Modulationsmuster umfasst;
wobei der Modulator dazu ausgelegt ist, passive Lastmodulation oder aktive Lastmodulation anzuwenden, um das Modulationsmuster zu erzeugen.

8. Vorrichtung (220) nach Anspruch 8, wobei die Bakensignalerzeugungseinheit (224) einen Modulator zum Erzeugen des Modulationsmusters umfasst.

9. Vorrichtung (220) nach Anspruch 7 oder 8, die eine integrierte Näherungsschaltungskarte ist.

10. Verfahren (228) zum Betreiben einer Hochfrequenzkommunikationsvorrichtung, HF-Kommunikationsvorrichtung, die eine Hochfrequenzidentifikationsvorrichtung, RFID-Vorrichtung, oder eine Nahfeldkommunikationsvorrichtung, NFC-Vorrichtung, ist, wobei die Vorrichtung eine Felddetektionseinheit, eine Bakensignalerzeugungseinheit und eine Übertragungseinheit umfasst, wobei das Verfahren (228) Folgendes umfasst:
Detektieren (230) des Vorhandenseins eines HF-Felds durch die Felddetektionseinheit, das von einer weiteren HF-Kommunikationsvorrichtung erzeugt wird;
Erzeugen (232) eines Bakensignals durch die Bakensignalerzeugungseinheit, falls die Detektionseinheit das Vorhandensein des HF-Feldes detektiert hat;
Übertragen (234) des Bakensignals durch die Übertragungseinheit an die weitere HF-Kommunikationsvorrichtung;
wobei das Bakensignal ein Modulationsmuster umfasst;
wobei der Modulator passive Lastmodulation oder aktive Lastmodulation anwendet, um das Modulationsmuster zu erzeugen.

11. Computerprogramm, umfassend Anweisungen, die bei Ausführung durch eine Hochfrequenzkommunikationsvorrichtung, HF-Kommunikationsvorrichtung, (220), die eine Hochfrequenzidentifikationsvorrichtung, RFID-Vorrichtung, oder eine Nahfeldkommunikationsvorrichtung, NFC-Vorrichtung, ist, die Schritte des Verfahrens (228) nach Anspruch 10 ausführen oder steuern.

## Revendications

1. Dispositif de communication à radiofréquence, RF, (200), qui est un dispositif d'identification à radiofréquence, RFID, ou un dispositif de communication en champ proche, NFC, comprenant :
une unité de communication (202) configurée pour générer un champ RF ;
une unité de détection (204) configurée pour détecter un signal balise transmis par un dispositif de communication RF supplémentaire lorsque ledit dispositif de communication RF supplémentaire est dans les limites de la portée du champ RF ;
une unité de traitement (206) configurée pour déterminer une intensité de réception dudit signal balise ;
une unité de réveil (208) configurée pour réveiller le dispositif de communication RF (200) si la différence entre l'intensité de réception du signal balise et une valeur de référence prédéfinie dépasse un seuil prédéfini ;
dans lequel l'unité de traitement (206) est configurée pour déterminer l'intensité de réception du signal balise en corrélant une configuration à l'intérieur dudit signal balise avec une configuration prédéfinie, dans lequel la configuration à l'intérieur du signal balise est une configuration de modulation ;
dans lequel ladite configuration est une configuration de modulation générée en appliquant une modulation de charge passive ou une modulation de charge active.

2. Dispositif (200) de la revendication 1, dans lequel le fait de corréler la configuration à l'intérieur du signal balise avec la configuration prédéfinie produit un indicateur d'intensité de réception, et dans lequel l'unité de traitement (206) est configurée pour comparer ledit indicateur d'intensité de réception à la valeur de référence afin de déterminer ladite différence.

3. Dispositif (200) d'une quelconque revendication précédente, dans lequel l'unité de communication (202) est configurée pour transmettre des impulsions RF en générant le champ RF.

4. Dispositif (200) d'une quelconque revendication précédente, qui est un dispositif de couplage de proximité.

5. Procédé (210) de fonctionnement d'un dispositif de communication à radiofréquence, RF, qui est un dispositif d'identification à radiofréquence, RFID, ou un dispositif de communication en champ proche, NFC, le dispositif comprenant une unité de communication, une unité de détection, une unité de traitement, et une unité de réveil, le procédé (210) comprenant :
la génération (212), par l'unité de communication, d'un champ RF ;
la détection (214), par l'unité de détection, d'un signal balise transmis par un dispositif de communication RF supplémentaire lorsque ledit dispositif de communication RF supplémentaire est dans les limites de la portée du champ RF ;
la détermination (216), par l'unité de traitement, d'une intensité de réception dudit signal balise ;
le réveil (218), par l'unité de réveil, du dispositif de communication RF si la différence entre l'intensité de réception du signal balise et une valeur de référence prédéfinie dépasse un seuil prédéfini ;
dans lequel l'unité de traitement détermine l'intensité de réception du signal balise en corrélant une configuration à l'intérieur dudit signal balise avec une configuration prédéfinie, dans lequel la configuration à l'intérieur du signal balise est une configuration de modulation ;
dans lequel ladite configuration est une configuration de modulation générée en appliquant une modulation de charge passive ou une modulation de charge active.

6. Programme d'ordinateur comprenant des instructions qui, lorsqu'elles sont exécutées par un dispositif de communication à radiofréquence, RF, (200), qui est un dispositif d'identification à radiofréquence, RFID, ou un dispositif de communication en champ proche, NFC, effectuent ou commandent les étapes du procédé (210) de la revendication 5.

7. Dispositif de communication à radiofréquence, RF, (220), qui est un dispositif d'identification à radiofréquence, RFID, ou un dispositif de communication en champ proche, NFC, comprenant :
une unité de détection de champ (222) configurée pour détecter la présence d'un champ RF généré par un dispositif de communication RF supplémentaire ;
une unité de génération de signal balise (224) configurée pour générer un signal balise si l'unité de détection (222) a détecté la présence dudit champ RF ;
une unité de transmission (226) configurée pour transmettre le signal balise au dispositif de communication RF supplémentaire ;
dans lequel le signal balise comprend une configuration de modulation ;
dans lequel le modulateur est configuré pour appliquer une modulation de charge passive ou une modulation de charge active afin de générer la configuration de modulation.

8. Dispositif (220) de la revendication 8, dans lequel l'unité de génération de signal balise (224) comprend un modulateur pour la génération de la configuration de modulation.

9. Dispositif (220) de la revendication 7 ou 8, qui est une carte de circuit intégré de proximité.

10. Procédé (228) de fonctionnement d'un dispositif de communication à radiofréquence, RF, qui est un dispositif d'identification à radiofréquence, RFID, ou un dispositif de communication en champ proche, NFC, le dispositif comprenant une unité de détection de champ, une unité de génération de signal balise, et une unité de transmission, le procédé (228) comprenant :
la détection (230), par l'unité de détection de champ, de la présence d'un champ RF généré par un dispositif de communication RF supplémentaire ;
la génération (232), par l'unité de génération de signal balise, d'un signal balise si l'unité de détection a détecté la présence dudit champ RF ;
la transmission (234), par l'unité de transmission, du signal balise au dispositif de communication RF supplémentaire ;
dans lequel le signal balise comprend une configuration de modulation ;
dans lequel le modulateur applique une modulation de charge passive ou une modulation de charge active afin de générer la configuration de modulation.

11. Programme d'ordinateur comprenant des instructions qui, lorsqu'elles sont exécutées par un dispositif de communication à radiofréquence, RF, (220), qui est un dispositif d'identification à radiofréquence, RFID, ou un dispositif de communication en champ proche, NFC, effectuent ou commandent les étapes du procédé (228) de la revendication 10.
